# EUROPÄISCHE PATENTSCHRIFT

(11) **EP 3 247 925 B1**
(45) Veröffentlichungstag und Bekanntmachung des Hinweises auf die Patenterteilung: **24.10.2018**
(21) Anmeldenummer: 16701110.5
(22) Anmeldetag: 19.01.2016
(51) Int. Cl.: F16H 61/00

(54) **VERFAHREN ZUR STEUERUNG UND/ODER REGELUNG EINES HYDRAULIKSYSTEMS EINES KRAFTFAHRZEUGES**
METHOD FOR THE OPEN-LOOP AND/OR CLOSED-LOOP CONTROL OF A HYDRAULIC SYSTEM OF A MOTOR VEHICLE
PROCÉDÉ DE COMMANDE ET/OU DE RÉGULATION D'UN SYSTÈME HYDRAULIQUE D'UN VÉHICULE AUTOMOBILE

(30) Priorität: 23.01.2015 DE 102015201107
(43) Veröffentlichungstag der Anmeldung: 29.11.2017
(73) Patentinhaber: Volkswagen Aktiengesellschaft, 38440 Wolfsburg (DE)
(72) Erfinder: BUCHMANN, René, 38518 Gifhorn (DE); GIGGEL, Stefan, 38528 Adenbüttel (DE); LOSEREIT, Dennis, 38100 Braunschweig (DE)
(86) Internationale Anmeldenummer: PCT/EP2016/050949
(87) Internationale Veröffentlichungsnummer: WO 2016/116418

(56) Entgegenhaltungen:
- EP-B1- 1 861 637
- WO-A1-2006/136320
- DE-A1- 10 162 973
- DE-A1-102008 040 667
- DE-A1-102008 041 402
- DE-A1-102009 001 110

## Beschreibung

Die Erfindung betrifft ein Verfahren zur Steuerung und/oder Regelung eines Hydrauliksystems eines Kraftfahrzeuges.

Aus der gattungsbildenden DE 10 2008 040 667 A1 ist ein Hydrauliksystem einer Getriebeeinrichtung und ein entsprechendes Verfahren zum Betreiben eines derartigen Hydrauliksystems bekannt. Das Hydrauliksystem weist eine Hauptölpumpe und eine Zusatzölpumpe auf. Die Hauptölpumpe ist mittels einer Verbrennungskraftmaschine funktional wirksam antreibbar. Die Zusatzölpumpe ist mittels eines Elektromotors antreibbar. Das Hydrauliksystem weist einen Hochdruckzweig und einen Niederdruckzweig auf. Der Hochdruckzweig kann auch als Primärkreis und der Niederdruckzweig kann auch als Sekundärkreis bezeichnet werden. Die Hauptölpumpe ist ausgangsseitig mit dem Primärkreis verbunden. Über ein Druckbegrenzungsventil ist die Hauptölpumpe ferner mit dem Sekundärkreis verbunden. Die Zusatzölpumpe ist über ein Rückschlagventil mit der Ausgangsseite der Hauptölpumpe verbunden. Über ein Schaltventil ist die Zusatzölpumpe ferner mit dem Sekundärkreis verbunden. Die Druckseite der Zusatzölpumpe ist über eine in Richtung des Primärkreises und des Sekundärkreises sperrbare und das Druckbegrenzungsventil umgehende Hydraulikleitung mit dem Sekundärkreis in Wirkverbindung bringbar. Diese Hydraulikleitung weist ein entsprechendes Schaltventil auf. Das Schaltventil kann dabei in einen die Hydraulikleitung freigebenden Zustand und in einen die Hydraulikleitung sperrenden Zustand geschaltet werden. Wenn die Hydraulikleitung durch das Umschaltventil freigegeben ist, wird der Sekundärkreis von der Zusatzölpumpe gespeist. Wenn die Hydraulikleitung durch das Schaltventil gesperrt ist, wird der Primärkreis von der Zusatzölpumpe gespeist. Das Schaltventil ist durch ein elektrisch ansteuerbares Magnetventil vorgesteuert. Je nach Schaltstellung des Schaltventils kann die Zusatzölpumpe so in den Hochdruckzweig oder in den Niederdruckzweig fördern. Bei einem entsprechenden Verfahren zum Betreiben des Hydrauliksystems wird vorgeschlagen, dass die Zusatzölpumpe in den Primärkreis fördert, wenn das Fördervolumen der Hauptölpumpe kleiner als ein Schwellwert ist. Wenn das Fördervolumen der Hauptölpumpe größer als ein entsprechender Schwellwert ist, wird das Schaltventil derart geschaltet, dass die Hydraulikleitung geöffnet wird und so die Zusatzölpumpe in den Sekundärkreis bzw. Niederdruckzweig fördert. Die Hauptölpumpe speist zumindest den Primärdruckkreis mit Hydrauliköl. Ein ohne elektrische Ansteuerung mögliches Umschalten des Schaltventils ist zwischen dem die Hydraulikleitung freigebenden Zustand und dem die Hydraulikleitung sperrenden Zustand in einer Ausgestaltung dadurch erreicht, dass das Schaltventil in Abhängigkeit eines Hauptdruckes des Primärkreises betätigt wird. Hierbei kann es vorgesehen sein, dass das Umschaltventil bei einem Hauptdruck kleiner oder gleich eines vordefinierten Schwellwerts die Hydraulikleitung sperrt und bei einem Hauptdruck größer als der Schwellwert die Hydraulikleitung freigibt. Alternativ kann das Schaltventil durch ein elektrisch ansteuerbares Magnetventil vorgesteuert werden.

Aus der EP 1 861 637 B1 ist ein Hydrauliksystem für ein Kraftfahrzeug und ein Verfahren zur Steuerung und/oder Regelung eines solchen Hydrauliksystems bekannt. Das Kraftfahrzeug ist mit einer Start-/Stopp-Funktionalität und mit einem Hybridantrieb ausgestattet. Das Hydrauliksystem weist eine Hauptölpumpe und eine Zusatzölpumpe auf. Die Hauptölpumpe ist von einer Verbrennungskraftmaschine antreibbar und die Zusatzpumpe ist von einem Elektromotor antreibbar. Das Hydrauliksystem weist einen Hauptdruckzweig und einen Niederdruckzweig auf. Die Hauptölpumpe stellt den Öldruck zur Einstellung des Hauptdruckes und des Niederdruckes durch ein Hauptdruckventil bereit. Dem Niederdruckzweig ist eine Getriebeschmierung sowie eine Anfahrelementkühlung zugeordnet. Zwischen dem Hauptdruckzweig und dem Niederdruckzweig ist das Hauptdruckventil angeordnet, mit dem ein von der Hauptölpumpe erzeugter Öldruck auf einen Hauptdruck zur Versorgung des Hauptdruckzweiges und ein Niederdruck zur Versorgung des Niederdruckzweiges einstellbar ist. Eine Verbindungsleitung verbindet einen Niederdruckausgang des Hauptdruckventils und den Niederdruckzweig miteinander. In einer weiteren Leitung zwischen dem Hauptdruckzweig und der Verbindungsleitung ist ein Rückschlagventil angeordnet, welches ein Einströmen von Öl in den Niederdruckzweig verhindert, jedoch ein Einströmen von Öl unter Niederdruck in den Hauptdruckzweig ermöglicht. In dem Niederdruckzweig ist ein Umschaltventil angeordnet. Von dem Umschaltventil geht eine Ölleitung zu Elementen einer Getriebeschmierung und eine weitere Ölleitung zu Elementen einer Anfahrkühlung ab. Es ist ein Ölmengenbedarfsermittlungselement vorgesehen, welches den aktuellen und/oder den unmittelbar bevorstehenden Ölmengenbedarf der hydraulischen Steuereinrichtungen des Automatikgetriebes und/oder des Anfahrelementes erfasst. Hierbei wird die aktuelle Ölpumpenleistung der Hauptölpumpe ermittelt. Aus dem Ölmengenbedarf und der Ölpumpenleistung der Hauptölpumpe wird ein Ölmengenmehrbedarf ermittelt. In einer Betriebsart des Hydrauliksystems steht die Hauptölpumpe still und die Zusatzölpumpe wird angetrieben. Das Umschaltventil wird dabei derart betätigt, dass die Schmierölversorgung des Getriebes und die Kühlölversorgung des Anfahrelementes bzw. der entsprechenden Kupplung über die elektrisch angetriebene Zusatzölpumpe zumindest größtenteils unterbunden ist. Die elektrisch angetriebene Zusatzölpumpe erzeugt hierbei einen solchen Öldruck, so dass dieser Öldruck zu einem Druckregler für die Schaltelemente des Automatikgetriebes geleitet wird, wobei die Schaltelemente vorbefüllt gehalten oder vorbefüllt werden können. Bei der ersten Betriebsart wird sichergestellt, dass auch bei abgeschaltetem Fahrmotor, nämlich bei abgeschalteter Verbrennungskraftmaschine, eine ausreichende Öldruckversorgung zur Vorbefüllung gewährleistet ist, so dass nach dem Anlassen des Fahrmotors ein Anfahren gegebenenfalls schnell durchführbar ist. Ein Rückfluss über das Hauptdruckventil in das gemeinsame Ölreservoir wird dadurch verhindert, dass das Hauptdruckventil geschlossen ist oder ein Rückschlagventil zwischen der Hauptölpumpe und dem Hauptdruckventil in Sperrstellung steht oder die Hauptölpumpe selbst eine ausreichende Sperrwirkung erzeugt. In einer zweiten Betriebsart des Hydrauliksystems werden sowohl die Hauptölpumpe als auch die Zusatzölpumpe angetrieben. Das Umschaltventil ist im Wesentlichen zur Kühlölversorgung des Anfahrelementes geöffnet. Das Hauptdruckventil ist derart eingestellt, dass an dem Druckregler ein zum Schalten der Schaltelemente des Getriebes ausreichend hoher Schaltdruck anliegt. Durch das Hauptdruckventil wird ein Ölstrom zu dem Umschaltventil geleitet, wobei der Druck dieses Ölstroms niedriger ist, als der zu dem Druckregler führende Druck. Die elektrisch angetriebene Zusatzölpumpe fördert zumindest noch denjenigen Ölstrom, der in Addition mit dem von der mechanisch angetriebenen Hauptölpumpe bereitgestellten Ölstrom zur Kühlung des Anfahrelementes notwendig ist. Bei dieser zweiten Betriebsart sind zwar beide Ölpumpen im Betrieb, jedoch wird die Leistungsaufnahme der Zusatzölpumpe nur auf den für einen sicheren Betrieb unbedingt notwendigen Umfang begrenzt, welcher kraftstoffsparend sein soll und unnötige Schadstoffemissionen vermeiden soll.

Aus der DE 101 62 973 A1 ist ein Hydrauliksystem und ein Verfahren zum Betrieb eines solchen Hydrauliksystems bekannt. Das Hydrauliksystem weist eine Hauptölpumpe und eine Zusatzölpumpe auf. Die Hauptölpumpe wird von einer Verbrennungskraftmaschine des Kraftfahrzeuges angetrieben. Die Zusatzölpumpe wird von einem Elektromotor angetrieben. Eine Antriebssteuervorrichtung für die Zusatzölpumpe detektiert einen hydraulischen Kupplungsdruck und treibt die elektrische Zusatzölpumpe so an, dass ein erforderlicher hydraulischer Druck aufrecht erhalten wird. Die Antriebssteuervorrichtung detektiert eine Öltemperatur und steuert die Betriebsspannung der elektrischen Pumpe auf der Grundlage der Öltemperatur. Dadurch soll der von der elektrischen Ölpumpe zugeführte hydraulische Druck den für die hydraulische Steuerung des Automatikgetriebes erforderlichen, hydraulischen Druck aufrechterhalten und verhindern, dass ein größerer hydraulischer Druck als notwendig zugeführt wird.

Aus der DE 10 2008 041 402 A1 ist ein Antriebsstrang eines Kraftfahrzeuges mit einem entsprechenden Hydrauliksystem bekannt. Das Hydrauliksystem weist eine von einer Verbrennungskraftmaschine antreibbare Hauptölpumpe und eine elektrisch betriebene Zusatzölpumpe auf. Eine Steuerungseinrichtung steuert einen Elektromotor der Zusatzölpumpe derart an, dass die Zusatzölpumpe nur dann eingeschaltet ist, wenn ein aktueller Hydraulikölbedarf des Getriebes von der Hauptölpumpe nicht bereitstellbar ist und wenn die Hydrauliköltemperatur kleiner als ein entsprechender Grenzwert ist und wenn eine zurückliegende Anschaltdauer der Zusatzölpumpe kleiner als ein entsprechender Grenzwert ist. Der Elektromotor kann im eingeschalteten Zustand in einer ersten Leistungsstufe mit einer relativ geringen Drehzahl oder in einer zweiten Leistungsstufe mit einer relativ hohen Drehzahl betrieben werden in Abhängigkeit von einer Bremspedalbetätigung, einer Wählhebelposition eines Getriebewählhebels, von einem eingelegten Istgang und von einer Fahrpedalbetätigung eines Gaspedals.

Das gattungsbildende Verfahren zur Steuerung und/oder Regelung des Hydrauliksystems ist noch nicht optimal ausgebildet. Eine an den Bedarf angepasste Steuerung und/oder Regelung des Hydrauliksystems erfolgt im Stand der Technik nur in eingeschränkter Form.

Der Erfindung liegt daher die Aufgabe zugrunde, das eingangs genannte Verfahren zur Steuerung des Hydrauliksystems derart auszugestalten und weiterzubilden, so dass eine bedarfsgerechte Steuerung und/oder Regelung ermöglicht ist.

Diese der Erfindung zugrunde liegende Aufgabe wird nun durch ein Verfahren mit den Merkmalen des Patentanspruches 1 gelöst. Eine Solldrehzahl des Elektromotors wird anhand eines Ventilstatus des Schaltventils und eines Niederdruckpumpenkennfeldes und eines Hochdruckpumpenkennfeldes bestimmt. In Abhängigkeit von der Schaltstellung des Schaltventils, nämlich in Abhängigkeit von dem Ventilstatus wird entweder das Niederdruckpumpenkennfeld oder das Hochdruckpumpenkennfeld verwendet. Das Niederdruckpumpenkennfeld wird verwendet, wenn die Zusatzölpumpe den Niederdruckzweig speist. Das Hochdruckpumpenkennfeld wird verwendet, wenn die Zusatzölpumpe den Hochdruckzweig speist. Das Niederdruckpumpenkennfeld beschreibt den Zusammenhang zwischen dem Fördervolumen der Zusatzölpumpe in den Niederdruckzweig und der hierzu erforderlichen Drehzahl des Elektromotors. Das Hochdruckpumpenkennfeld beschreibt den Zusammenhang zwischen dem Fördervolumen der Zusatzölpumpe in den Hochdruckzweig und der hierzu erforderlichen Drehzahl des Elektromotors. Da die Druckniveaus im Hochdruckkreis und im Niederdruckkreis unterschiedlich sind, sind unterschiedliche Drehzahlen notwendig, um das gleiche Fördervolumen zu erzielen. Das Niederdruckpumpenkennfeld und das Hochdruckpumpenkennfeld können von unterschiedlichen Faktoren abhängig sein: beispielsweise den Druckniveaus im Hochdruckzweig bzw. im Niederdruckzweig, der Öltemperatur, der Anzahl und Ausgestaltung der Aktuatoren des Hochdruckzweiges, der Ausgestaltung und Anordnung der zu kühlenden und/oder zu schmierenden Bauteile und dgl. Das Niederdruckpumpenkennfeld und das Hochdruckpumpenkennfeld können durch Messungen ermittelt werden. Dadurch dass das entsprechend gemessene Niederdruckpumpenkennfeld und das entsprechende Hochdruckpumpenkennfeld zur Steuerung und/oder Regelung des Elektromotors der Zusatzölpumpe genutzt werden, ist eine bedarfsgenauere Steuerung und/oder Regelung ermöglicht. Das Verfahren und das zugehörige Hydrauliksystem haben den Vorteil, dass eine bedarfsgerechte Steuerung und/oder Regelung des Hydrauliksystems, insbesondere des Elektromotors der Zusatzölpumpe, erfolgt.

Der Bedarf wird vorzugsweise wie folgt ermittelt. Es wird zunächst die Istdrehzahl des Elektromotors ermittelt. Ferner wird der Volumenstromgesamtbedarf ermittelt. Dieser Volumenstromgesamtbedarf kann durch Addition des Volumenstrombedarfs des Hochdruckzweiges und des Volumenstrombedarfs des Niederdruckzweiges ermittelt werden. Durch die Hauptölpumpe wird ein bestimmter Volumenstrom bereitgestellt. Dieser bereitgestellte Volumenstrom wird mit dem Volumenstromgesamtbedarf verglichen. Wenn der Volumenstromgesamtbedarf kleiner gleich ist als der von der Hauptölpumpe zur Verfügung gestellte Volumenstrom, wird die Zusatzölpumpe nicht benötigt; die Solldrehzahl des Elektromotors kann auf null gesetzt werden. Dies kann durch eine entsprechende Gestaltung des Niederdruckpumpenkennfelds und des entsprechenden Hochdruckpumpenkennfeldes erfolgen.

Wenn der Volumenstromgesamtbedarf nicht durch den zur Verfügung stehenden Volumenstrom der Hauptölpumpe gedeckt werden kann, wird der Verbraucher mit der höchsten Priorität, nämlich der Volumenstrombedarf des Hochdruckzweiges mit dem zur Verfügung stehenden Volumenstrom der Hauptölpumpe verglichen. Wenn der Volumenstrombedarf des Hochdruckzweiges durch die Hauptölpumpe gedeckt werden kann, wird das hydraulische Schaltventil so betätigt, dass der Niederdruckzweig unter anderem mittels der Zusatzölpumpe gespeist wird. Das Schaltventil wird dabei insbesondere geschlossen. Es wird zum einen das überschüssige Angebot der Hauptölpumpe auf den niederpriorisierten Niederdruckzweig verteilt. Zum anderen wird der restliche Volumenstrombedarf des Niederdruckzweiges mit Hilfe der elektrisch angetriebenen Zusatzölpumpe gedeckt, wobei die Zusatzölpumpe mittels des Niederdruckpumpenkennfelds gesteuert wird, bis der Volumenstrombedarf des Niederdruckzweiges gedeckt ist.

Reicht der zur Verfügung gestellte Volumenstrom der Hauptölpumpe nicht aus, um den Volumenstrombedarf des Hauptdruckzweiges zu decken, so wird das hydraulische Schaltventil so betätigt, dass der Hochdruckzweig zusätzlich mittels der Zusatzölpumpe gespeist wird. Das Schaltventil wird dabei insbesondere geöffnet. Zumindest der Volumenstromfehlbedarf im Hochdruckzweig wird nun durch die Zusatzölpumpe gedeckt. Vorzugsweise wird durch die Zusatzölpumpe mehr als der Volumenstromfehlbedarf im Hochdruckzweig durch die Zusatzölpumpe gefördert, so dass durch eine entsprechende Systemauslegung des Hydrauliksystems mit entsprechenden Leckagestellen gleichzeitig die Versorgung des Niederdruckzweigs sichergestellt ist. Es sind vorzugsweise Leckagestellen zwischen dem Hochdruckzweig und dem Niederdruckzweig vorhanden, so dass der überschüssige Volumenstrom zu Kühlungs- und Schmierzwecken in den Niederdruckzweig geleitet wird.

Die Regelung der elektrischen Pumpe gestaltet sich wie folgt. Für die korrekte Betrachtung der Ist-Situation des Volumenstrombedarfs des Hydrauliksystems wird zu einer ersten Volumenstrombilanz eine Volumenstromregelabweichung addiert. Die erste Volumenstrombilanz ergibt sich wiederum aus dem Bedarf des Hochdruckzweiges zuzüglich des Bedarfs des Niederdruckzweiges abzüglich des durch die Hauptölpumpe zur Verfügung gestellten Volumenstroms. Um die Volumenstromregelabweichung zu bilden, wird zunächst die Differenz aus der Istdrehzahl des Elektromotors und der Solldrehzahl des Elektromotors gebildet. Mittels des Ventilstatus, des Niederdruckpumpenkennfelds oder des entsprechenden Hochdruckpumpenkennfeldes und der Drehzahldifferenz aus der Solldrehzahl und der Istdrehzahl wird die Volumenstromregelabweichung ermittelt. Die Volumenstromregelabweichung wird zu der ersten Volumenstrombilanz addiert, woraus sich eine weitere Volumenstrombilanz ergibt. Je nach Ventilstatus und der ermittelten weiteren Volumenstrombilanz ergibt sich aus dem entsprechenden Pumpenkennfeld für den Hochdruckzweig oder den Niederdruckzweig die Solldrehzahl für den Elektromotor.

In einer Ausgestaltung ist die Hauptölpumpe als Konstantpumpe ausgebildet. Die Konstantpumpe kann als hubreduzierte Konstantpumpe ausgebildet sein.

In alternativer Ausgestaltung ist die Hauptölpumpe als Verstellpumpe zur Erzeugung eines bestimmten variablen Volumenstroms ausgebildet. In dem Verfahren wird nun dazu ein Verstellfaktor berücksichtigt. Der Verstellfaktor ergibt sich aus der Division des Bedarfs der hydraulischen Bereiche des Hochdruckzweiges und Niederdruckzweiges geteilt durch den maximal möglichen Fördervolumenstrom der Verstellpumpe. Nur wenn der Verstellfaktor einen Wert kleiner als eins annimmt, wird die variable Flussmenge aus der Multiplikation des Verstellfaktors mit dem maximalen Fördervolumenstrom berechnet. Andernfalls, wenn der Verstellfaktor einen Wert größer gleich eins annimmt, wird die Verstellpumpe maximal geöffnet und kann in der weiteren Betrachtung analog einer Konstantpumpe behandelt werden. In dem Verfahren wird dabei der Verstellfaktor bestimmt. Aus diesem kann über ein separates Hauptölpumpenkennfeld der Verstellpumpe die Pumpenverstellung errechnet werden. Das Hauptölpumpenkennfeld kann beispielsweise durch entsprechende Prüfstandmessungen ermittelt werden.

Erfolgt die Verstellung der Verstellpumpe hydraulisch, so geht die berechnete Verstellanforderung wiederum in den Volumenstrombedarf des Hochdruckzweiges als zusätzliche Anforderung mit ein.

Es ergeben sich unterschiedliche Einsatzmöglichkeiten des Verfahrens. Insbesondere in Fahrsituationen, in denen die Verbrennungskraftmaschine abgeschaltet ist, kann durch die Zusatzölpumpe zumindest der Hochdruckzweig versorgt werden, so dass Gangstufen ein- und ausgelegt oder vorgewählt werden können. Ferner wird durch die Zusatzölpumpe zumindest eine Radsatzschmierung gewährleistet. Beim Abschleppen oder "Segeln" oder bei Einsatz einer Start-Stopp-Automatik ist die Verbrennungskraftmaschine ausgeschaltet, aber die Gangstufen können in Abhängigkeit von der Geschwindigkeit des Kraftfahrzeugs entsprechend nachgeführt werden, um zu hohe Drehzahlen der abtriebsseitig mitdrehenden Bauteile des Getriebes oder der Kupplung zu vermeiden.

Insbesondere weist das Kraftfahrzeug eine Start-Stopp-Automatik auf. Durch das Verfahren ist insbesondere auch eine Start-Stopp-Automatik auch bei höheren Fahrgeschwindigkeiten möglich und/oder ein Segeln des Kraftfahrzeuges mit ausgestellter Verbrennungskraftmaschine darstellbar, wobei die Gangstufen in Abhängigkeit von der Geschwindigkeit nachgeführt werden können, zu gegebener Zeit die Kupplung angelegt werden kann und der Motor gestartet werden kann.

Ferner ist durch das Verfahren die bedarfsgerechte Steuerung und/oder Regelung der Zusatzölpumpe auch bei einem höheren Kühlölbedarf gewährleistet, so dass auch bei einem höheren Kühlölbedarf entsprechende Start-Stopp-Funktionen oder ein "Segeln" möglich ist. Die Verfügbarkeit der Start-Stopp-Automatik oder des "Segelns" sind hierdurch gesteigert. Es lassen sich Verluste durch die Bereitstellung hydraulischer Hilfsenergien für die Aktivierung sowie zu Kühl- und Schmierzwecken verringern. Es ist denkbar, dass eine elektrohydraulische Parksperre mittels des Hydrauliksystems betätigbar ist. Solche Parksperren werden auch als "park-by-wire" bezeichnet.

Die eingangs genannten Nachteile sind daher vermieden und entsprechende Vorteile sind erzielt.

Es gibt nun eine Vielzahl von Möglichkeiten, das erfindungsgemäße Verfahren weiter auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörenden Beschreibung näher erläutert. In der Zeichnung zeigt:
- Fig. 1: in einer stark schematischen Darstellung ein Hydrauliksystem mit einer Hauptölpumpe und mit einer Zusatzölpumpe,
- Fig. 2: in einem schematischen Diagramm die Ansteuerung der Zusatzölpumpe,
- Fig. 3: in einer schematischen Darstellung die Bestimmung einer Solldrehzahl des Elektromotors der Zusatzölpumpe mittels zweier Pumpenkennfelder, nämlich eines Hochdruckpumpenkennfelds und eines Niederdruckpumpenkennfelds,
- Fig. 4: in einer schematischen Darstellung die Bestimmung eines Ventilstatus,
- Fig. 5: in einer schematischen Darstellung die Bestimmung einer Volumenstromregelabweichung mittels der beiden Pumpenkennfelder, und
- Fig. 6: in einer schematischen Darstellung eine Steuerung einer optionalen Verstellpumpe.

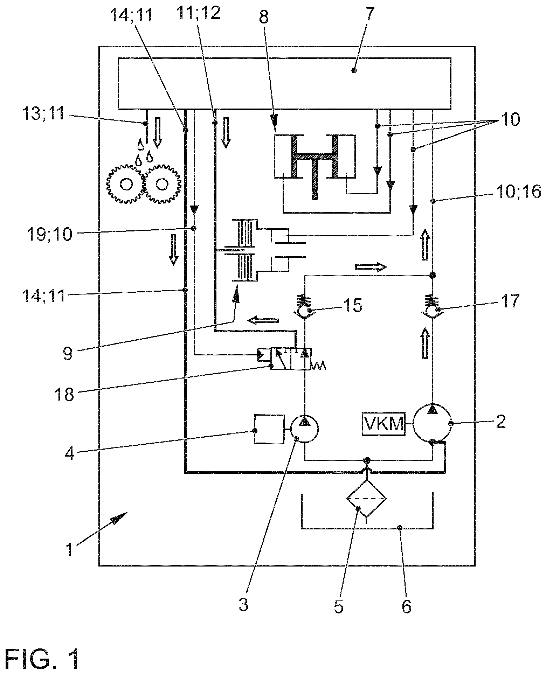

In Fig. 1 ist ein Hydrauliksystem 1 dargestellt. Das Hydrauliksystem 1 weist eine Hauptölpumpe 2 auf. Die Hauptölpumpe 2 wird von einer Verbrennungskraftmaschine VKM angetrieben. Das Hydrauliksystem 1 weist ferner eine Zusatzölpumpe 3 auf. Die Zusatzölpumpe 3 wird von einem Elektromotor 4 angetrieben. Die Hauptölpumpe 2 und die Zusatzölpumpe 3 fördern über einen Saugfilter 5 Getriebeöl aus einem Getriebeölsumpf 6. Die Hauptölpumpe 2 versorgt eine Mechatronikeinheit 7 mit dem Getriebeöl. Von der Mechatronikeinheit 7 werden entsprechende Aktuatoren 8 oder auch eine Kupplung 9 mit Drucköl versorgt. Die Kupplung 9 ist insbesondere als Doppelkupplung ausgebildet.

Das Hydrauliksystem 1 weist nun einen Hochdruckzweig 10 und einen Niederdruckzweig 11 auf. Die Aktuatoren 8 und die Kupplung 9 sind Teil des Hochdruckzweigs 10. Teil des Niederdruckzweiges 11 sind eine Kühlung 12, eine Radsatzschmierung 13 und ein Rücklauf 14. Dem Getriebe wird dabei Kühlöl beziehungsweise Schmieröl über die Kühlung 12 beziehungsweise die Radsatzschmierung 13 zugeleitet, wie es in Fig. 1 durch die beiden Zahnritzel links in der Abbildung dargestellt ist.

Die Zusatzölpumpe 3 fördert nun parallel zu der Hauptölpumpe 2 ebenfalls entsprechendes Öl zur Mechatronikeinheit 7. Hierbei ist zwischen der Mechatronikeinheit 7 und der Zusatzölpumpe 3 ein Rückschlagventil 15 vorgesehen. Das Rückschlagventil 15 kann in die Mechatronikeinheit 7 integriert sein oder separat zur Mechatronikeinheit 7 angeordnet sein und dabei mit der Mechatronikeinheit 7 über eine Zuleitung 16 verbunden sein.

Ferner ist vorzugsweise ein Rückschlagventil 17 stromabwärts der Hauptölpumpe 2 in der Zuleitung 16 angeordnet. Das Rückschlagventil 17 kann in einer Ausgestaltung in die Hauptölpumpe 2 integriert sein. Alternativ kann das Rückschlagventil 17 in die Mechatronikeinheit 7 integriert sein oder separat zur Hauptölpumpe 2 und zur Mechatronikeinheit 7 ausgebildet und angeordnet sein, wie es in Fig. 1 dargestellt ist. In der in Fig. 1 dargestellten Ausgestaltung ist die Hauptölpumpe 2 als Konstantpumpe ausgestaltet. In alternativer Ausgestaltung kann die Hauptölpumpe 2 verstellbar ausgebildet sein, beziehungsweise als Verstellpumpe ausgebildet sein.

Es ist nun ein Schaltventil 18 stromabwärts der Zusatzölpumpe 3 vorgesehen. Der eine Ausgang des Schaltventils 18 ist dabei funktional wirksam mit dem Rückschlagventil 15 und damit der Zuleitung 16 des Hochdruckzweiges 10 verbunden. Der andere Ausgang des Schaltventils 18 ist mit dem Niederdruckzweig 11 verbunden. Das Schaltventil 18 ist als Schieber ausgestaltet. Die Rückstellung erfolgt über eine Feder. Die Ansteuerung des Schaltventils 18 erfolgt über ein elektrisches Vorsteuerventil (nicht dargestellt) in der Mechatronikeinheit 7. Das Schaltventil 18 ist dazu über eine Steuerleitung 19 mit der Mechatronikeinheit 7 verbunden. Die Steuerleitung 19 ist Teil des Hochdruckzweiges 10.

Die Hauptölpumpe 2 kann nun durch die Zusatzölpumpe 3 aufgeladen werden, wobei die Mechatronikeinheit 7 über den Rücklauf 14 mit dem Ansaugtrakt der Hauptölpumpe 2 verbunden ist. Der Rücklauf 14 beziehungsweise die entsprechende Versorgungsleitung ist mittels der Mechatronikeinheit 7 schaltbar. Wenn kein Drucköl und kein Kühlölvolumenstrom angefordert werden, fließt abgesehen von den auftretenden Systemleckagen, der Ölvolumenstrom mit der Zusatzölpumpe 3 über den Rücklauf 14 in den Ansaugtrakt der Hauptölpumpe 2. Im ölbefüllten Zustand des Ansaugtraktes der Hauptölpumpe 2 treten dann keine Ansaugschwierigkeiten auf.

Über einen weiteren nicht dargestellten Rücklauf fließt das Getriebeöl entsprechend in den Getriebeölsumpf 6 zurück.

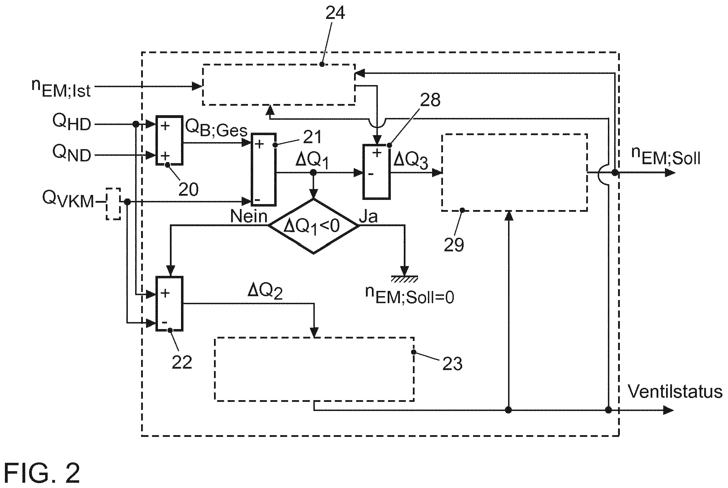

Im Folgenden darf nun anhand der Fig. 2 die Steuerung beziehungsweise Regelung des Hydrauliksystems 1, insbesondere des Elektromotors 4 und des Schaltventils 18 erläutert werden. Das Verfahren ist in einem Steuergerät (nicht dargestellt) implementiert.

Die Eingangsgrößen des Verfahrens sind die Istdrehzahl n_{EM,Ist} des Elektromotors 4 sowie die Volumenstrombedarfe - nämlich der Volumenstrombedarf Q_{HD} der Verbraucher des Hochdruckzweigs 10 und der Volumenstrombedarf Q_{ND} der Verbraucher des Niederdruckzweiges 11 - sowie der zur Verfügung stehende Volumenstrom Q_{VKM} der Hauptölpumpe 2. Die verschiedenen hydraulischen Bereiche, nämlich der Hochdruckzweig 10 und der Niederdruckzweig 11 melden jeweils einen unterschiedlichen Bedarf in Form der Volumenstrombedarfe Q_{HD} und Q_{ND}.

In den Volumenstrombedarf Q_{HD} fliest die Leckage des Hochdruckzweiges 10, ein dynamischer Vorhalt zur Betätigung der Kupplung 9, ein dynamischer Vorhalt zur Betätigung der Gangsteller und ein dynamischer Sicherheitsvorhalt sowie Sonderzustände ein. Die Sonderzustände umfassen beispielsweise Start-Stopp-Fahrsituationen, Segeln mit ausgeschalteter Verbrennungskraftmaschine und dgl. Die Leckage kann dabei aus einem am Prüfstand gemessenen Kennfeld (nicht dargestellt) gewonnen werden.

Der Volumenstrombedarf Q_{ND} des Niederdruckzweiges 11 kann insbesondere den Bedarf zur Kühlung 12 der Kupplung 9, den Bedarf zur Radsatzschmierung 13 und eventuell einen Sicherheitsoffset umfassen.

Der Volumenstrom Q_{VKM} beschreibt den aktuell durch die Hauptölpumpe 2 geförderten Volumenstrom. Der zur Verfügung stehende Volumenstrom Q_{VKM} der Hauptölpumpe 2 kann vorzugsweise aus einer Temperatur T_{Sumpf} des Getriebeöls im Getriebeölsumpf 6 und aus der Drehzahl n_{VKM} des Verbrennungsmotors VKM mittels eines entsprechenden Kennfeldes gebildet werden.

Zunächst darf die Steuerung des Schaltventils 18 in Abhängigkeit von den Volumenstrombedarfen Q_{HD} und Q_{ND} erläutert werden:
In einem Verfahrensschritt 20 werden die Volumenstrombedarfe Q_{HD} und Q_{ND} zu einem Gesamtvolumenstrombedarf O_{B,GES} addiert. In einem Verfahrensschritt 21 wird der Volumenstromgesamtbedarf O_{B,GES} dem zur Verfügung stehenden Angebot durch die mechanische Pumpe, nämlich dem Volumenstrom Q_{VKM} gegenübergestellt. In dem Verfahrensschritt 21 wird die Differenz von Q_{B,GES} und Q_{VKM} gebildet. Als Ergebnis des Verfahrensschritts 21 wird die erste Volumenstrombilanz ΔQ₁ gebildet. Diese erste Volumenstrombilanz ΔQ₁ kann positiv oder negativ ausfallen. Der Volumenstromgesamtbedarf O_{B,GES} geht positiv in die erste Volumenstrombilanz ΔQ₁ ein. Der zur Verfügung stehende Volumenstrom Q_{VKM} der Hauptölpumpe 2 geht negativ in die erste Volumenstrombilanz ΔQ₁ ein.

Wenn die erste Volumenstrombilanz ΔQ₁ einen Wert kleiner gleich null aufweist, ist das zur Verfügung stehende Angebot der Hauptölpumpe 2 ausreichend. Die elektrische Zusatzölpumpe 3 wird nicht angesteuert. Die Solldrehzahl n_{EM,Soll} des Elektromotors 4 wird auf null gesetzt (vgl. Fig.2).

Wenn die erste Volumenstrombilanz ΔQ₁ einen Wert größer als Null aufweist, kann der Volumenstromgesamtbedarf O_{B,GES} nicht allein durch die Hauptölpumpe 2 gedeckt werden. In diesem Fall wird in einem weiteren Verfahrensschritt 22 eine zweite Volumenstrombilanz ΔQ₂ gebildet, wobei der Volumenstrombedarf Q_{HD} des Hochdruckzweiges 10 dem zur Verfügung stehenden Volumenstrom Q_{VKM} der Hauptölpumpe 2 gegenübergestellt wird. Der Volumenstrombedarf Q_{HD} geht dabei positiv und der zur Verfügung stehende Volumenstrom Q_{VKM} geht dabei negativ in die zweite Volumenstrombilanz ΔQ₂ ein. Aus dieser zweiten Volumenstrombilanz ΔQ₂ lässt sich ablesen, ob das Angebot der Hauptölpumpe 2, nämlich der zur Verfügung stehende Volumenstrom Q_{VKM} der Hauptölpumpe 2 ausreichend ist, um den Volumenstrombedarf Q_{HD} des Hochdruckzweiges 10 zu decken.

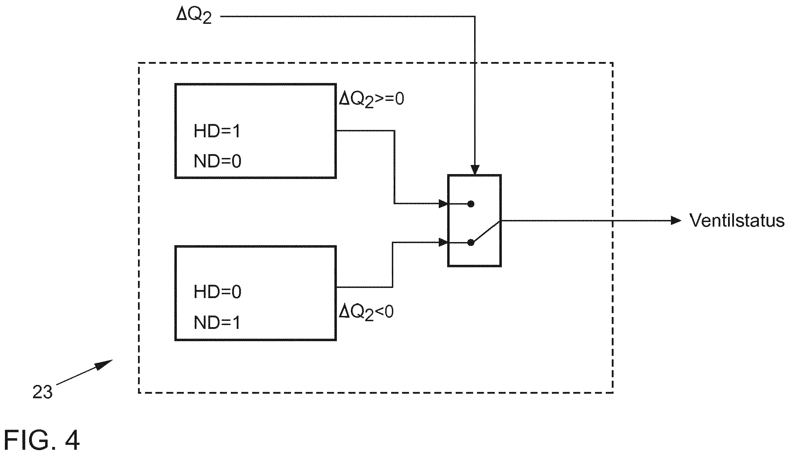

In Abhängigkeit des Vergleichs, ob die Volumenstrombilanz ΔQ₂ größer gleich oder kleiner als null ist, wird der Ventilstatus HD und ND gesetzt. Dieser Verfahrensschritt 23 ist in Fig. 4 dargestellt. Wenn die zweite Volumenstrombilanz ΔQ₂ größer gleich null ist, ist der Volumenstrom Q_{VKM} der Hauptölpumpe 2 nicht ausreichend, um die Verbraucher mit der höchsten Priorität mit dem Volumenstrombedarf Q_{HD} des Hochdruckzweiges 10 zu versorgen. Das hydraulische Schaltventil 18 wird geöffnet, so dass die Zusatzölpumpe 3 zusätzlich den Hochdruckzweig 10 mit Volumenstrom versorgt. Der Niederdruckzweig 11 wird hierbei nun nicht mehr direkt mit dem Volumenstrom der Zusatzölpumpe 3 versorgt. In dem Fall, in dem ΔQ₂ größer als Null ist, wird durch eine entsprechende Systemauslegung mit hinreichenden Leckagen gleichzeitig die Versorgung des Niederdruckzweiges 11 mit dem Volumenstrombedarf Q_{ND} sichergestellt. Als Ventilstatus wird HD = 1, ND = 0 ausgegeben.

Mittels der Zusatzölpumpe 3 wird in den Hochdruckzweig 10 gefördert, wenn der zur Verfügung stehende Volumenstrom Q_{VKM} der Hauptölpumpe 2 weder den Volumenstromgesamtbedarf Q_{B,Ges} noch den Volumenstrombedarf Q_{HD} des Hochdruckzweiges 10 allein decken kann.

In dem Fall, in dem die zweite Volumenstrombilanz ΔQ₂ kleiner als null ist, ist das Angebot der Hauptölpumpe 2, nämlich der zur Verfügung stehende Volumenstrom Q_{VKM} der Hauptölpumpe 2 ausreichend um die Verbraucher des Hochdruckzweiges 10 mit dem entsprechenden Volumenstrom zu versorgen. Das hydraulische Schaltventil 18 ist geschlossen. Damit wird in einem weiteren Schritt zum einen das überschüssige Angebot bzw. die Volumenstrombilanz ΔQ₂ auf den Niederdruckzweig 11 verteilt. Zum anderen wird der restliche Bedarf mit Hilfe der Zusatzölpumpe 3 in den geforderten Bereich, nämlich bishin zu dem Volumenstrombedarf Q_{ND} oder darüber hinaus gesteuert. Als Ventilstatus wird HD = 0, ND = 1 ausgegeben.

Die Zusatzölpumpe 3 speist den Niederdruckzweig 11 genau dann, wenn der Volumenstromgesamtbedarf Q_{B,Ges} nicht allein durch die Hauptölpumpe 2 gedeckt werden kann, aber der Volumenstrombedarf Q_{HD} des Hochdruckzweiges 10 von dem zur Verfügung stehenden Volumenstrom Q_{VKM} der Hauptölpumpe 2 gedeckt werden kann.

Im Folgenden darf auf die Regelung der Zusatzölpumpe 3 anhand der Fig. 2, 3 und 5 eingegangen werden.

In einem Verfahrensschritt 24 wird eine Volumenstromregelabweichung Q_{Abweichung} aus dem Ventilstatus, der Solldrehzahl n_{EM,Soll} des Elektromotors 4 und einer Istdrehzahl n_{EM,Ist} des Elektromotors 4 gebildet (vgl. Fig. 2 und Fig. 4).

Die eingangs genannten Nachteile sind nun dadurch vermieden, dass die Solldrehzahl n_{EM,Soll} des Elektromotors 4 anhand der dritten Volumenstrombilanz ΔQ₃, des Ventilstatus des Schaltventils 18, eines Niederdruckpumpenkennfeldes 26 oder eines Hochdruckpumpenkennfeldes 27 bestimmt wird, wobei in Abhängigkeit von dem Ventilstatus entweder das Niederdruckpumpenkennfeld 26 oder das Hochdruckpumpenkennfeld 27 zur Bestimmung der Solldrehzahl n_{EM,soll} verwendet wird. Das Hochdruckpumpenkennfeld 27 basiert auf Messungen und beschreibt möglichst genau den Zusammenhang zwischen der Drehzahl des Elektromotors n_{EM} und dem dabei durch die Zusatzölpumpe 3 in den Hochdruckzweig 10 geförderten Volumenstrom. Das Niederdruckpumpenkennfeld 26 basiert ebenfalls auf Messungen und beschreibt möglichst genau den Zusammenhang zwischen der Drehzahl n_{EM} des Elektromotors 4 und dem dabei durch die Zusatzölpumpe 3 in den Niederdruckzweig 11 geförderten Volumenstrom.

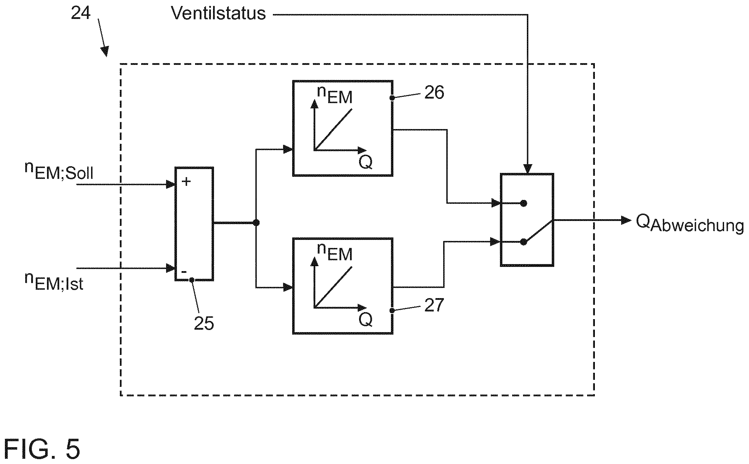

Es wird hierzu (vgl. Fig. 5) in einem Verfahrensschritt 25 die Differenz aus der Solldrehzahl n_{EM,Soll} und der Istdrehzahl n_{EM,Ist} gebildet. Es wird nun anhand des Niederdruckpumpenkennfeldes 26 oder des Hochdruckpumpenkennfeldes 27 eine Volumenstromregelabweichung Q_{Abweichung} bestimmt. Das Niederdruckpumpenkennfeld 26 wird verwendet, wenn das Schaltventil 18 geschlossen ist und die Zusatzölpumpe 3 in den Niederdruckzweig 11 fördert, d.h. Ventilstatus HD=0, ND=1. Das Hochdruckpumpenkennfeld 27 wird verwendet, wenn das Schaltventil 18 geöffnet ist und die Zusatzölpumpe 3 in den Hochdruckkreis 10 fördert, d.h. Ventilstatus HD=1, ND=0.

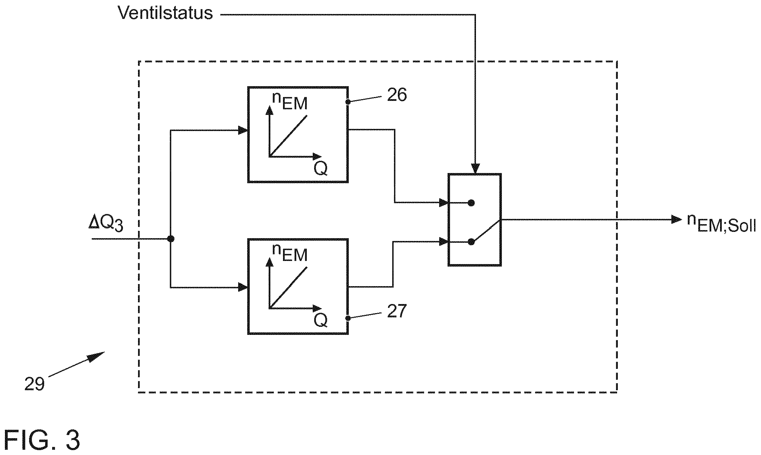

In einem Verfahrensschritt 28 (vgl. Fig. 2) wird nun eine dritte Volumenstrombilanz ΔQ₃ aus der ersten Volumenstrombilanz ΔQ₁ und der Volumenstromregelabweichung Q_{Abweichung} gebildet. Diese dritte Volumenstrombilanz ΔQ₃ wird in einem Verfahrensschritt 29 (vgl. Fig. 2 und Fig. 3) genutzt, um die Solldrehzahl n_{EM,soll} der Zusatzölpumpe 3 mit Hilfe des Niederdruckpumpenkennfeldes 26 oder des Hochdruckpumpenkennfeldes 27 in Abhängigkeit von dem Ventilstatus zu bestimmen. Je nach Ventilstatus wird dabei entweder das Niederdruckpumpenkennfeld 26 oder das Hochdruckpumpenkennfeld 27 verwendet. Das Niederdruckpumpenkennfeld 26 wird verwendet, wenn das Schaltventil 18 geschlossen ist und die Zusatzölpumpe 3 in den Niederdruckzweig 11 fördert. Das Hochdruckpumpenkennfeld 27 wird verwendet, wenn das Schaltventil 18 geöffnet ist und die Zusatzölpumpe 3 in den Hochdruckkreis 10 fördert.

Die Fördermenge Q_{EM} der Zusatzölpumpe 3 hängt ebenfalls von der Temperatur T_{Sumpf} des Öls im Getriebeölsumpf 6 ab, wobei der Zusammenhang zwischen der Solldrehzahl n_{EM, Soll} und der Fördermenge Q_{EM} beispielsweise durch ein weiteres Kennfeld beschrieben werden kann.

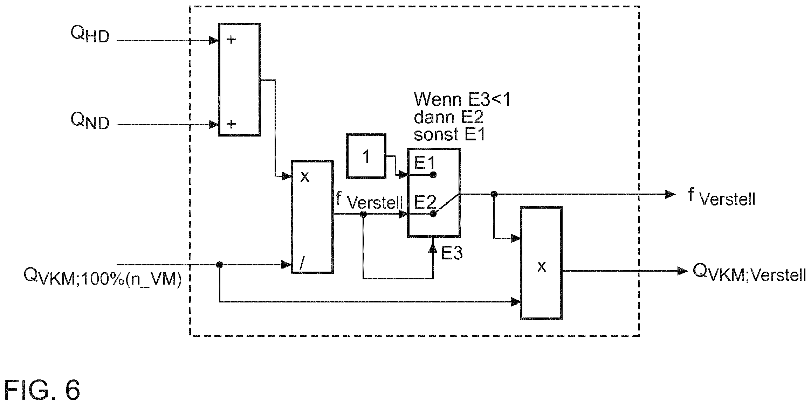

Im Folgenden darf auf den optionalen Verstellpumpenmechanismus anhand von Fig. 6 näher eingegangen werden. Das Verfahren berücksichtigt einen Verstellpumpenmechanismus zur Erzeugung der Flussmenge Q_{VKM}, und eines Verstellfaktors f_{Verstell}. Hierzu wird zunächst der Verstellfaktor f_{Verstell} berechnet. Dieser ergibt sich aus der Division des Volumenstromgesamtbedarf Q_{B,Ges} (= Q_{HD} + Q_{ND}) geteilt durch den maximal möglichen Fördervolumenstrom Q_{VKM}, _{100%(n_VKM)} der Verstellpumpe. Der maximal mögliche Fördervolumenstrom Q_{VKM}, _{100%(n_VKM)} ist abhängig von der aktuellen Drehzahl n_{VKM} der Verbrennungskraftmaschine VKM. Nur wenn der Verstellfaktor f_{Verstell} einen Wert kleiner als eins annimmt, wird der variable Fördervolumenstrom Q_{VKM,Verstell} aus der Multiplikation des Verstellfaktors f_{Verstell} mit dem maximal möglichen Fördervolumenstrom Q_{VKM}, _{100% (n_VKM)} berechnet. Der Fördervolumenstrom Q_{VKM,Verstell} bildet hierbei den zur Verfügung stehenden Volumenstrom Q_{VKM} der Hauptölpumpe 2.

Andernfalls wird die Verstellpumpe maximal geöffnet und kann in der weiteren Betrachtung analog einer Konstantpumpe betrachtet werden. Der maximal mögliche Fördervolumenstrom Q_{VKM}, _{100% (n_VKM)} wird als zur Verfügung stehender Volumenstrom Q_{VKM} verwendet. Zusätzlich gibt das Modell den Verstellfaktor f_{Verstell} aus. Aus diesem kann über ein separates Kennfeld der Verstellpumpe (nicht dargestellt) die Pumpenverstellung errechnet werden. Geschieht die Verstellung der Verstellpumpe hydraulisch, geht die berechnete Verstellanforderung wieder in den Volumenstrombedarf Q_{HD} als zusätzliche Anforderung mit ein.

### Bezugszeichenliste

- 1: Hydrauliksystem
- 2: Hauptölpumpe
- 3: Zusatzölpumpe
- 4: Elektromotor
- 5: Saugfilter
- 6: Getriebeölsumpf
- 7: Mechatronikeinheit
- 8: Aktuator
- 9: Kupplung
- 10: Hochdruckzweig
- 11: Niederdruckzweig
- 12: Kühlung
- 13: Radsatzschmierung
- 14: Rücklauf
- 15: Rückschlagventil
- 16: Zuleitung
- 17: Rückschlagventil
- 18: Schaltventil
- 19: Steuerleitung
- 20: Verfahrensschritt: Addition Q_{HD} und Q_{ND}
- 21: Verfahrensschritt: Bilden der Differenz von Q_{B,Ges} und Q_{VKM}
- 22: Verfahrensschritt: Bilden der Differenz von Q_{HD} und Q_{VKM}
- 23: Verfahrensschritt: Bestimmen des Ventilstatus
- 24: Verfahrensschritt: Bestimmen der Volumenstromregelabweichung Q_{Abweichung}
- 25: Verfahrensschritt: Bilden der Differenz von n_{EM,Soll} und n_{EM,Ist}
- 26: Niederdruckpumpenkennfeld
- 27: Hochdruckpumpenkennfeld
- 28: Verfahrensschritt: Bestimmen der Volumenstrombilanz ΔQ₃
- 29: Verfahrensschritt: Bestimmen n_{EM,Soll}

- VKM: Verbrennungskraftmaschine
- n_{EM,Ist}: Istdrehzahl des Elektromotors
- n_{EM,Soll}: Solldrehzahl des Elektromotors
- Q_{HD}: Volumenstrombedarf des Hochdruckkreises
- Q_{ND}: Volumenstrombedarf des Niederdruckzweiges
- Q_{VKM}: zur Verfügung stehender Volumenstrom der Hauptölpumpe
- Q_{B,Ges}: Volumenstromgesamtbedarf
- ΔQ₁: erste Volumenstrombilanz
- ΔQ₂: zweite Volumenstrombilanz
- ΔQ₃: dritte Volumenstrombilanz
- Q_{Abweichung}: Volumenstromregelabweichung
- n_{VKM}: aktuelle Drehzahl der Verbrennungskraftmaschine
- Q_{VKM}, _{100% (n_VKM)}: maximal mögliche Fördervolumenstrom der Verstellpumpe
- Q_{VKM,Verstell}: Fördervolumenstrom der Verstellpumpe
- f_{Verstell}: Verstellfaktor

## Patentansprüche

1. Verfahren zur Steuerung und/oder Regelung eines Hydrauliksystems (1) eines Kraftfahrzeuges, wobei das Hydrauliksystem (1) eine Hauptölpumpe (2) und eine Zusatzölpumpe (3) aufweist, wobei die Hauptölpumpe (2) von einer Verbrennungskraftmaschine (VKM) angetrieben wird, wobei die Zusatzölpumpe (3) mittels eines Elektromotors (4) angetrieben wird, wobei ein Hochdruckzweig (10) zumindest teilweise von der Hauptölpumpe (2) gespeist wird, wobei mittels der Zusatzölpumpe (3) in Abhängigkeit von der Schaltstellung eines Schaltventils (18) der Hochdruckzweig (10) oder ein Niederdruckzweig (11) gespeist wird, wobei die Zusatzölpumpe (3) zur Speisung des Hochdruckzweiges (10) oder des Niederdruckzweiges (11) in Abhängigkeit von einem Volumenstromgesamtbedarf (Q_{B,Ges}) und von dem mittels der Hauptölpumpe (2) zur Verfügung stehenden Volumenstrom (Q_{VKM}) eingesetzt wird, **dadurch gekennzeichnet, dass** eine Solldrehzahl (n_{EM,Soll}) des Elektromotors (4) anhand einer Volumenstrombilanz (ΔQ₃), eines Ventilstatus des Schaltventils (18), eines Niederdruckpumpenkennfeldes (26) oder eines Hochdruckpumpenkennfeldes (27) bestimmt wird, wobei in Abhängigkeit von dem Ventilstatus entweder das Niederdruckpumpenkennfeld (26) oder das Hochdruckpumpenkennfeld (27) zur Bestimmung der Solldrehzahl (n_{EM,Soll}) verwendet wird, wobei das Niederdruckpumpenkennfeld (26) den Zusammenhang zwischen dem Fördervolumen der Zusatzölpumpe (3) in den Niederdruckzweig (11) und der hierzu erforderlichen Drehzahl des Elektromotors (4) beschreibt, und wobei das Hochdruckpumpenkennfeld (27) den Zusammenhang zwischen dem Fördervolumen der Zusatzölpumpe (3) in den Hochdruckzweig (10) und der hierzu erforderlichen Drehzahl des Elektromotors (4) beschreibt.

2. Verfahren nach Anspruch 1, **dadurch gekennzeichnet, dass** eine Volumenstromregelabweichung (Q_{Abweichung}) anhand der Solldrehzahl (n_{EM,Soll}) und der Istdrehzahl (N_{EM,Ist}) und des Ventilstatus des Schaltventils (18) sowie des Niederdruckpumpenkennfeldes (26) oder des Hochdruckpumpenkennfeldes (27) bestimmt wird, wobei in Abhängigkeit von dem Ventilstatus entweder das Niederdruckpumpenkennfeld (26) oder das Hochdruckpumpenkennfeld (27) zur Bestimmung der Volumenstromregelabweichung (Q_{Abweichung}) verwendet wird.

3. Verfahren nach Anspruch 2, **dadurch gekennzeichnet, dass** die Volumenstrombilanz (ΔQ₃) durch die Volumenstromregelabweichung (Q_{Abweichung}) zuzüglich der Differenz des Volumenstromgesamtbedarfs (Q_{B,Ges}) und des mittels der Hauptölpumpe (2) zur Verfügung stehenden Volumenstroms (Q_{VKM}) bestimmt wird.

4. Verfahren nach einem der Ansprüche 1 bis 3, **dadurch gekennzeichnet, dass** die Hauptölpumpe (2) als Konstantpumpe ausgebildet ist.

5. Verfahren nach einem der Ansprüche 1 bis 3, **dadurch gekennzeichnet, dass** die Hauptölpumpe (2) als Verstellpumpe ausgebildet ist, wobei ein Verstellfaktor (f_{Verstell}) aus der Division des Volumenstromgesamtbedarf (Q_{B,Ges}) geteilt durch die maximal möglichen Fördervolumenstrom (Q_{VKM, 100% (n_VKM)}) der Verstellpumpe berechnet wird, wobei - wenn der Verstellfaktor (f_{Verstell}) einen Wert kleiner als eins annimmt - der variable Volumenstrom (Q_{VKM,Verstell}) aus der Multiplikation von dem Verstellfaktor (f_{Verstell}) mal dem maximal möglichen Fördervolumenstrom (Q_{VKM,100%(n_VKM)}) berechnet wird und ansonsten der maximal mögliche Fördervolumenstrom (Q_{VKM, 100% n_VKM)}) als zur Verfügung stehender Volumenstrom Q_{VKM} verwendet wird.

6. Verfahren nach einem der vorstehenden Ansprüche, **dadurch gekennzeichnet, dass** die Zusatzölpumpe (3) den Niederdruckzweig (11) genau dann speist, wenn der Volumenstromgesamtbedarf (Q_{B,Ges}) nicht allein durch den zur Verfügung stehenden Volumenstrom (Q_{VKM}) der Hauptölpumpe (2) gedeckt werden kann, aber der Volumenstrombedarf (Q_{HD}) des Hochdruckzweiges (10) von dem zur Verfügung stehenden Volumenstrom (Q_{VKM}) der Hauptölpumpe (2) gedeckt werden kann.

7. Verfahren nach einem der vorstehenden Ansprüche, **dadurch gekennzeichnet, dass** mittels der Zusatzölpumpe (3) in den Hochdruckzweig (10) gefördert wird, wenn der zur Verfügung stehende Volumenstrom (Q_{VKM}) der Hauptölpumpe (2) weder den Volumenstromgesamtbedarf (Q_{B,Ges}) noch den Volumenstrombedarf (Q_{HD}) des Hochdruckzweig (10) allein decken kann.

8. Verfahren nach dem vorstehenden Anspruch, **dadurch gekennzeichnet, dass** durch die Zusatzölpumpe (3) mehr als der Volumenstromfehlbedarf im Hochdruckzweig (10) gefördert wird, wobei durch eine entsprechende Systemauslegung mittels Leckagestellen zwischen dem Hochdruckzweig (1) und dem Niederdruckzweig (11) die Versorgung des Niederdruckzweiges (11) sichergestellt wird.

9. Verfahren nach einem der vorstehenden Ansprüche, **dadurch gekennzeichnet, dass** in Fahrsituationen, in denen die Verbrennungskraftmaschine abgeschaltet ist, durch die Zusatzölpumpe (3) zumindest der Hochdruckzweig (10) versorgt wird, wobei Gangstufen in Abhängigkeit der Geschwindigkeit des Kraftfahrzeugs ein- und ausgelegt oder vorgewählt werden, um hohe Drehzahlen der abtriebsseitig mitdrehenden Bauteile des Getriebes oder der Kupplung (9) zu vermeiden.

## Claims

1. Method for the open-loop and/or closed-loop control of a hydraulic system (1) of a motor vehicle, wherein the hydraulic system (1) has a main oil pump (2) and an additional oil pump (3), wherein the main oil pump (2) is driven by an internal combustion engine (VKM), wherein the additional oil pump (3) is driven by an electric motor (4), wherein a high-pressure branch (10) is at least partially fed by the main oil pump (2), wherein the high-pressure branch (10) or a low-pressure branch (11) is fed by means of the additional oil pump (3) depending on the switch position of a switching valve (18), wherein the additional oil pump is used (3) for feeding the high-pressure branch (10) or the low-pressure branch (11) depending on a total volume flow demand (QB,Tot) and on the volume flow (QVKM) available from the main oil pump (2), **characterized in that** a nominal rotation speed (nEM,Nom) of the electric motor (4) is determined on the basis of a volume flow balance (ΔQ3), a valve status of the switching valve (18), a low-pressure pump map (26) or a high-pressure pump map (27), wherein depending on the valve status, either the low-pressure pump map (26) or the high-pressure pump map (27) is used to determine the nominal rotation speed (nEM,Nom), wherein the low-pressure pump map (26) describes the correlation between the delivery volume of the additional oil pump (3) into the low-pressure branch (11) and the rotation speed of the electric motor (4) required for this, and the high-pressure pump map (27) describes the correlation between the delivery volume of the additional oil pump (3) into the main pressure branch (10) and the rotation speed of the electric motor (4) required for this.

2. Method according to Claim 1, **characterized in that** a volume flow control deviation (QDeviation) is determined from the nominal rotation speed (nEM,Nom) and the actual rotation speed (NEM,Act) and the valve status of the switching valve (18) and the low-pressure pump map (26) or the high-pressure pump map (27), wherein depending on the valve status, either the low-pressure pump map (26) or the high-pressure pump map (27) is used to determine the volume flow control deviation (QDeviation).

3. Method according to Claim 2, **characterized in that** the volume flow balance (ΔQ3) is determined by the volume flow control deviation (QDeviation) plus the difference between the total volume flow demand (QB,Tot) and the volume flow (QVKM) available from the main oil pump (2).

4. Method according to any of Claims 1 to 3, **characterized in that** the main oil pump (2) is formed as a fixed displacement pump.

5. Method according to any of Claims 1 to 3, **characterized in that** the main oil pump (2) is formed as a variable displacement pump, wherein an adjustment factor (fAdjust) is calculated by dividing the total volume flow demand (QB,Tot) by the maximum possible delivery volume flow (QVKM, 100%(n_VKM)) of the variable displacement pump, wherein, if the adjustment factor (fAdjust) assumes a value of less than one, the variable volume flow (QVKM,Adjust) is calculated by multiplying the adjustment factor (fAdjust) by the maximum possible delivery volume flow (QVKM, 100%(n_VKM)), and otherwise the maximum possible delivery volume flow (QVKM,100%(n_VKM)) is used as the available volume flow (QVKM).

6. Method according to any of the preceding claims, **characterized in that** the additional oil pump (3) feeds the low-pressure branch (11) precisely when the total volume flow demand (QB,Tot) cannot be covered solely by the volume flow (QVKM) available from the main oil pump (2), but the volume flow demand (QHD) of the high-pressure branch (10) can be covered by the volume flow (QVKM) available from the main oil pump (2).

7. Method according to any of the preceding claims, **characterized in that** the additional oil pump (3) delivers into the high-pressure branch (10) when the volume flow (QVKM) available from the main oil pump (2) alone cannot cover either the total volume flow demand (QB,Tot) or the volume flow demand (QHD) of the high-pressure branch (10).

8. Method according to the preceding claim, **characterized in that** the additional oil pump (3) delivers more than the volume flow demand shortfall in the high-pressure branch (10), wherein by corresponding system design, the supply to the low-pressure branch (11) is ensured by means of leakage points between the high-pressure branch (1) and the low-pressure branch (11).

9. Method according to any of the preceding claims, **characterized in that** in driving situations in which the internal combustion engine is switched off, at least the high-pressure branch (10) is supplied by the additional oil pump (3), wherein gears are selected and deselected or preselected depending on the speed of the motor vehicle in order to avoid high rotation speeds of the components of the transmission or the clutch (9) also rotating on the output side.

## Revendications

1. Procédé de commande et/ou de régulation d'un système hydraulique (1) d'un véhicule automobile, dans lequel le système hydraulique (1) présente une pompe à huile principale (2) et une pompe à huile secondaire (3), dans lequel la pompe à huile principale (2) est entraînée par un moteur à combustion interne (VKM), dans lequel la pompe à huile secondaire (3) est entraînée au moyen d'un moteur électrique (4), dans lequel une branche à haute pression (10) est alimentée au moins en partie par la pompe à huile principale (2), dans lequel la branche à haute pression (10) ou une branche à basse pression (11) est alimentée au moyen de la pompe à huile secondaire (3) en fonction de la position de commutation d'une vanne commutable (18), dans lequel la pompe à huile secondaire (3) est utilisée pour l'alimentation de la branche à haute pression (10) ou de la branche à basse pression (11) en fonction d'une demande totale de courant volumique (Q_{B,tot}) et du courant volumique (Q_{VKM}) disponible au moyen de la pompe à huile principale (2), **caractérisé en ce que** l'on détermine un nombre de tours de consigne (n_{EM,cons}) du moteur électrique (4) à l'aide d'un bilan de courant volumique (ΔQ₃), d'un statut de vanne de la vanne commutable (18), d'un diagramme caractéristique de pompe à basse pression (26) ou d'un diagramme caractéristique de pompe à haute pression (27), dans lequel on utilise pour la détermination du nombre de tours de consigne (n_{EM,cons}) soit le diagramme caractéristique de pompe à basse pression (26) soit le diagramme caractéristique de pompe à haute pression (27) en fonction du statut de vanne, dans lequel le diagramme caractéristique de pompe à basse pression (26) décrit la relation entre le volume de transport de la pompe à huile secondaire (3) dans la branche à basse pression (11) et le nombre de tours nécessaire à cet effet du moteur électrique (4), et dans lequel le diagramme caractéristique de pompe à haute pression (27) décrit la relation entre le volume de transport de la pompe à huile secondaire (3) dans la branche à haute pression (10) et le nombre de tours nécessaire à cet effet du moteur électrique (4).

2. Procédé selon la revendication 1, **caractérisé en ce que** l'on détermine un écart de régulation de courant volumique (Q_{écart}) à l'aide du nombre de tours de consigne (n_{EM,cons}) et du nombre de tours réel (N_{EM,réel}) et du statut de vanne de la vanne commutable (18) ainsi que du diagramme caractéristique de pompe à basse pression (26) ou du diagramme caractéristique de pompe à haute pression (27), dans lequel on utilise, en fonction du statut de vanne, soit le diagramme caractéristique de pompe à basse pression (26) soit le diagramme caractéristique de pompe à haute pression (27) pour la détermination de l'écart de régulation du courant volumique (Q_{écart}).

3. Procédé selon la revendication 2, **caractérisé en ce que** l'on détermine le bilan de courant volumique (ΔQ₃) par l'écart de régulation du courant volumique (Q_{écart}) majoré de la différence entre la demande totale de courant volumique (Q_{B,tot}) et le courant volumique (Q_{VKM}) disponible au moyen de la pompe à huile principale (2).

4. Procédé selon l'une quelconque des revendications 1 à 3, **caractérisé en ce que** la pompe à huile principale (2) est une pompe à volume constant.

5. Procédé selon l'une quelconque des revendications 1 à 3, **caractérisé en ce que** la pompe à huile principale (2) est une pompe à volume variable, dans lequel on calcule le facteur de variation (fᵥₐᵣ) à partir de la division de la demande totale de courant volumique (Q_{B,tot}) divisée par le courant volumique de transport maximal possible (Q_{VKM, 100%(n_VKM)}) de la pompe à volume variable, dans lequel - lorsque le facteur de variation (fᵥₐᵣ) prend une valeur inférieure à un - on calcule le courant volumique variable (Q_{VKM, var}) à partir de la multiplication du facteur de variation (fᵥₐᵣ) par le courant volumique de transport maximal possible (Q_{VKM, 100%(n_VKM)}) et on utilise par ailleurs le courant volumique de transport maximal possible (Q_{VKM}, _{100% (n_VKM)}) comme courant volumique Q_{VKM} disponible.

6. Procédé selon l'une quelconque des revendications précédentes, **caractérisé en ce que** la pompe à huile secondaire (3) alimente exactement la branche à basse pression (11), lorsque la demande totale de courant volumique (Q_{B, tot}) ne peut pas être couverte uniquement par le courant volumique disponible (Q_{VKM}) de la pompe à huile principale (2), mais que la demande de courant volumique (Q_{HD}) de la branche à haute pression (10) peut être couverte par le courant volumique disponible (Q_{VKM}) de la pompe à huile principale (2).

7. Procédé selon l'une quelconque des revendications précédentes, **caractérisé en ce que** l'on transporte au moyen de la pompe à huile secondaire (3) dans la branche à haute pression (10), lorsque le courant volumique disponible (Q_{VKM}) de la pompe à huile principale (2) ne peut à lui seul couvrir ni la demande totale de courant volumique (Q_{B, tot}) ni la demande de courant volumique (Q_{HD}) de la branche à haute pression (10).

8. Procédé selon la revendication précédente, **caractérisé en ce que** l'on transport par la pompe à huile secondaire (3) plus que la demande manquante de courant volumique dans la branche à haute pression (10), dans lequel on assure l'alimentation de la branche à basse pression (11) par une conception correspondante du système au moyen de points de fuite entre la branche à haute pression (1) et la branche à basse pression (11).

9. Procédé selon l'une quelconque des revendications précédentes, **caractérisé en ce que**, dans des situations de roulage dans lesquelles le moteur à combustion interne est arrêté, on alimente au moins la branche à haute pression (10) au moyen de la pompe à huile secondaire (3), dans lequel on engage ou on dégage ou on présélectionne des rapports de vitesse en fonction de la vitesse du véhicule automobile, afin d'éviter des nombres de tours élevés des pièces de la boîte de vitesse ou de l'embrayage (9) entraînées en rotation côté sortie.
